# EUROPEAN PATENT APPLICATION

(11) **EP 2 684 710 A1**
(43) Date of publication of application: **15.01.2014**
(21) Application number: 12755666.0
(22) Date of filing: 06.03.2012
(51) Int. Cl.: B60B 27/00, B21K 1/05, B60B 35/02, F16C 33/58

(54) **SHAFT MEMBER FOR WHEEL ROLLING BEARING DEVICE**

(30) Priority: 07.03.2011 JP 2011048896
(71) Applicant: JTEKT Corporation, Osaka-shi, Osaka 542-8502 (JP)
(72) Inventor: MASUDA, Yoshinori, Osaka-shi Osaka 542-8502 (JP); OKUMURA, Tsuyoshi, Osaka-shi Osaka 542-8502 (JP)
(74) Representative: Winter, Brandl, Fürniss, Hübner, Röss, Kaiser, Polte - Partnerschaft
(86) International application number: PCT/JP2012/055670
(87) International publication number: WO 2012/121243

(57) **Abstract**

[Problem] In a shaft member of a wheel rolling bearing device, local concentration of stress (stress concentration) which is generated by a load applied to flange portions that are formed by cold forging is suppressed.

[Means for Resolution] A flange portion which is formed by cold forging is configured by an outer flange portion and an inner flange portion. As viewed in the axial section, the inner flange portion is formed to be thicker than the outer flange portion. The shape of a flange surface which is on a side where a bolt seat 27a is disposed includes: a shape of a concave curved portion which is connected to the outer flange portion, as the shape of the flange surface between a basal end portion of the shape of a vertical surface which has a constant length in a radial direction, in the position of a radially basal end portion, and the outer flange portion; and a convex curved portion 21i which is continuously joined to the concave curved portion 21h, in a radially inner side with respect to the concave curved portion 21h, and the radius of curvature R3 of the convex curved portion 21i is smaller than the radius of curvature R2 of the concave curved portion 21h.

## Description

### Technical Field

The present invention relates to a shaft member of a wheel rolling bearing device.

### Background Art

Conventionally, a shaft member of a wheel rolling bearing device, including: a shaft portion in which an inner-ring raceway surface is formed on the outer peripheral surface; a fitting shaft portion which is formed on the side of one end of the shaft portion; and a plurality of flange portions which are located between the shaft portion and the fitting shaft portion, which radially extend in an outward radial direction, and through each of which a bolt hole where a hub bolt is to be placed is formed is disclosed and known in, for example, Patent Document 1 and Patent Document 2. Both the shaft members of a wheel rolling bearing device which are disclosed in Patent Document 1 and Patent Document 2 are molded by a lateral extrusion process in cold forging. Therefore, the weight can be reduced as compared to a conventional flange portion which is formed into a disk-like shape. Conventionally, moreover, also a production method of molding a shaft member of a wheel rolling bearing device by hot forging has been known. In a surface molded by hot forging, the dimensional accuracy is low, and oxidation and decarburization occur in the surface. In the molded surface, therefore, machining is required to be applied to a portion where a high dimensional accuracy is requested. However, it is known that a shaft member of a wheel rolling bearing device in which the processing accuracy is high can be obtained by cold forging.

In the shaft members of a wheel rolling bearing device which are disclosed in Patent Document 1 and Patent Document 2, the flange portions have a configuration where they are located between the shaft portion and the fitting shaft portion, and formed to radially extend in an outward radial direction.

### Prior Art Reference

### Patent Documents

Patent Document 1: JP-A-2006-111070
Patent Document 2: JP-A-2008-45718

### Summary of the Invention

### Problem that the Invention is to Solve

A wheel bearing device constituting the shaft member of a wheel rolling bearing device is attached in order to rotatably support a wheel with respect to a suspension of a vehicle body. Therefore, a load due to turning of a vehicle is applied to the shaft member of a wheel rolling bearing device as a bending load, and repetitive stress occurs in the flange portions of the shaft member of a wheel rolling bearing device. A load which is caused by the wheel during running of the vehicle is applied through the hub bolts of the flange portions of the shaft member of a wheel rolling bearing device, and stress due to the load is concentrated in the vicinities of the hub bolts. In this way, the flange portions of the shaft member of a wheel rolling bearing device have the structure where stress concentration is significant.

However, Patent Document 1 and Patent Document 2 described above fail to positively disclose a manner of, in the flange portions of the shaft member of a wheel rolling bearing device, forming the flange shape which suppresses stress due to the above-described load from being concentrated, in consideration that the flange shapes are limited by the balance between various components such as the outer ring and hub bolts of the wheel rolling bearing device, and counter components such as a wheel and a brake rotor. There is room for improvement.

The invention has been conducted in view of the above-discussed point. It is a problem to be solved by the invention that, in a shaft member of a wheel rolling bearing device, including: a shaft portion in which an inner-ring raceway surface is formed on the outer peripheral surface; a fitting shaft portion which is formed on the side of one end of the shaft portion; and a plurality of flange portions which are located between the shaft portion and the fitting shaft portion, which radially extend in an outward radial direction, and through each of which a bolt hole where a hub bolt is to be placed is formed, local concentration of stress (stress concentration) which is generated by a load applied to the flange portions that are formed by cold forging is suppressed.

### Means for Solving the Problem

In order to solve the problem, a shaft member of a wheel rolling bearing device of a mode of the invention is a shaft member of a wheel rolling bearing device, comprising: a shaft portion in which an inner-ring raceway surface is formed on an outer peripheral surface; a fitting shaft portion which is formed on a side of one end of the shaft portion; and a plurality of flange portions which radially extend in an outward radial direction, and through each of which a bolt hole where a hub bolt is to be placed is formed, characterized in that the flange portions are formed by cold forging, each of the flange portions includes: an outer flange portion through which the bolt hole is disposed, and which is in a radially outward region; and an inner flange portion which is radially inwardly formed continuously from the outer flange portion, and which is in a radially inward region, the inner flange portion is formed to be thicker than the outer flange portion as viewed in an axial section, in order to cause a thickness shape of the inner flange portion to be thickest in a radially constant length range of a position of a radially basal end portion, and gradually become thinner toward a radially outer side, a shape of a flange surface which is on a side where a bolt seat of the hub bolt is disposed is formed as a shape of a vertical surface which has a constant length in a radial direction, in the position of the radially basal end portion, and, as a shape of the flange surface between a basal end portion of the shape of the vertical surface and the outer flange portion, includes: a shape of a concave curved surface which is connected to the outer flange portion; and a convex curved portion which is continuously joined to the concave curved portion in a radially inner side with respect to the concave curved portion, and a radius of curvature of the convex curved portion is smaller than a radius of curvature of the concave curved portion.

According to the configuration, since the convex curved portion and the concave curved portion are continuously disposed, the disposition position of the inclined surface is allowed to be changed without causing the inclined surface to interfere with a surface on which the bolt seat of the hub bolt is supported, and the thickness of a portion of the inclined surface of the inner flange portion can be increased. Namely, the distance between a conventional inclined surface and the basal end portion of the fitting shaft portion can be set to be thicker than that in the conventional art. Moreover, the radius of curvature of the concave curved portion is larger than that of the convex curved portion, and therefore stress concentration which is generated in accordance with a load applied from the hub bolt can be suppressed.

Namely, local concentration of stress (stress concentration) which is generated by a load applied to the flange portions can be suppressed. Furthermore, the rigidities of the flange portions that are formed by cold forging can be improved.

### Effect of the Invention

According to the invention, in a shaft member of a wheel rolling bearing device, local concentration of stress (stress concentration) which is generated by a load applied to the flange portions that are formed by cold forging can be suppressed.

### Brief Description of the Drawings

[Fig. 1] Fig. 1 is an axial sectional view showing a state where a shaft member of a wheel rolling bearing device of Embodiment 1 of the invention is installed in a wheel bearing device.
[Fig. 2] Fig. 2 is a plan view showing the shaft member of the wheel rolling bearing device of Embodiment 1 of the invention, as viewed from the side of a forged recess.
[Fig. 3] Fig. 3 is an axial sectional view showing the shaft member of the wheel rolling bearing device of Embodiment 1 of the invention.
[Fig. 4] Fig. 4 is an axial sectional view enlargedly showing a fitting shaft portion and a flange portion of the shaft member of the wheel rolling bearing device of Embodiment 1 of the invention.

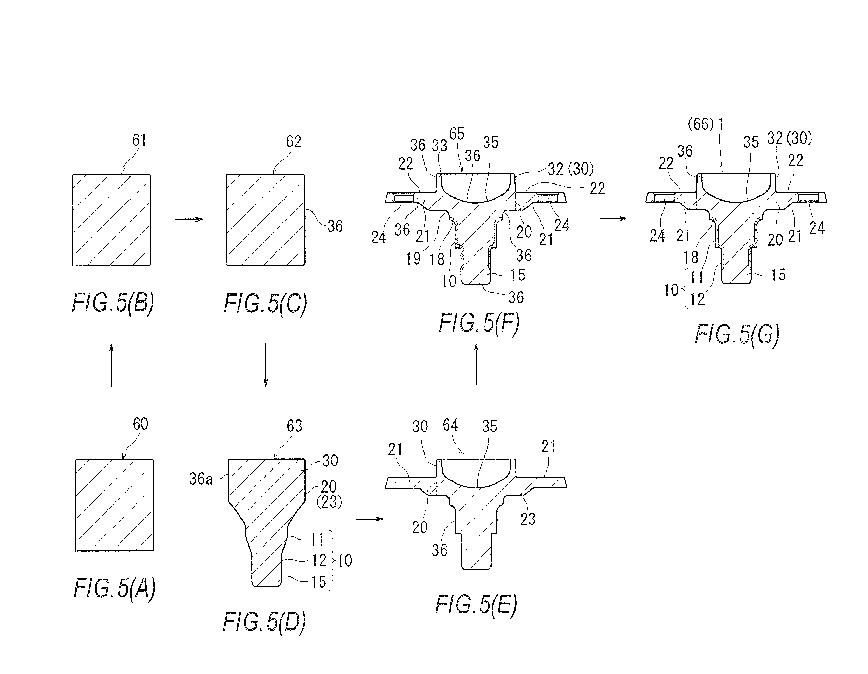

[Fig. 5] Figs. 5(A) to 5(G) are a process chart showing steps of producing the shaft member of the wheel rolling bearing device of Embodiment 1 of the invention, from a shaft-like material, Fig. 5(A) is a step view showing the shaft-like material, Fig. 5(B) is a step view showing an annealed shaft-like material, Fig. 5(C) is a step view showing a coating-treated shaft-like material, Fig. 5(D) is a step view showing a primary cold forged product, Fig. 5(E) is a step view showing a secondary cold forged product, Fig. 5(F) is a step view showing a turned forged product, and Fig. 5(G) is a step view showing a heat-treated forged product.
[Fig. 6] Fig. 6 is an overall perspective view of the shaft member of the wheel rolling bearing device of Embodiment 1 of the invention.
[Fig. 7] Fig. 7 is a plan view of the shaft member of the wheel rolling bearing device of Embodiment 1 of the invention, as viewed from the side of the shaft portion.
[Fig. 8] Fig. 8 is an axial sectional view enlargedly showing the flange portion of the shaft member of the wheel rolling bearing device of Embodiment 1 of the invention.
[Fig. 9] Fig. 9 is an axial sectional view enlargedly showing an inner flange portion of the flange portion of the shaft member of the wheel rolling bearing device of Embodiment 1 of the invention.
[Fig. 10] Fig. 10 is an overall perspective view of a shaft member of a wheel rolling bearing device of Modification 1 of Embodiment 1 of the invention.
[Fig. 11] Fig. 11 is an axial sectional view enlargedly showing a flange portion of a shaft member of a wheel rolling bearing device of Modification 2 of Embodiment 1 of the invention.

### Mode for Carrying Out the Invention

A mode for carrying out the invention will be described by way of an embodiment.

### Embodiment 1

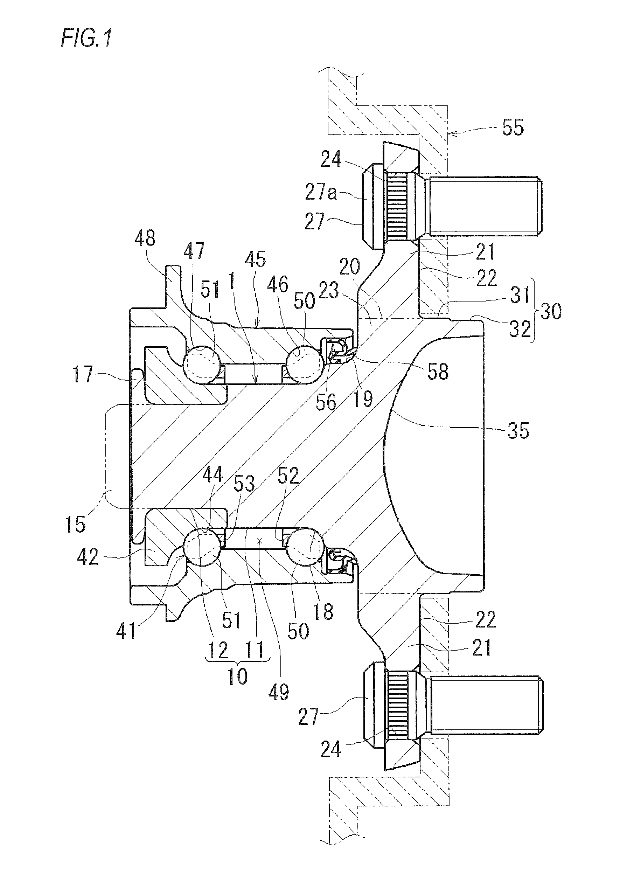

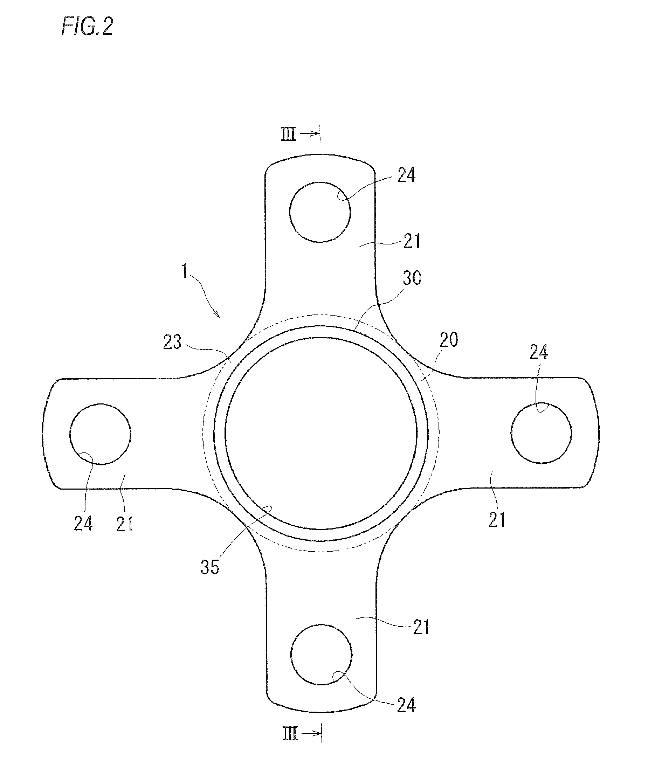

Embodiment 1 of the invention will be described with reference to Figs. 1 to 11.

As shown in Fig. 1, a shaft member 1 of a wheel rolling bearing device (wheel hub nut) which is to be employed in a wheel rolling bearing device integrally includes: a shaft portion 10; a fitting shaft portion 30 which is formed on the side of one end of the shaft portion 10, which is larger in diameter than the shaft portion 10, and onto which a center hole of a wheel (not shown) is to be fitted; a flange basal portion 23 which is located between the shaft portion 10 and the fitting shaft portion 30; and a plurality of flange portions 21 which radially extend in an outward radial direction from the outer peripheral surface of the flange basal portion 23.

Then, bolt holes 24 where hub bolts 27 for fastening the wheel are to be placed by press insertion penetrate trough each of the plurality of flange portions 21.

In the fitting shaft portion 30, a brake rotor fitting portion 31 which corresponds to a brake rotor 55 is formed on the side of the flange portions 21, and a wheel fitting portion 32 which is slightly smaller in diameter than the brake rotor fitting portion 31, and which corresponds to the wheel is formed on the tip end side.

In Embodiment 1, the shaft portion 10 of the shaft member 1 of the wheel rolling bearing device is formed into a stepped shaft shape in which the portion on the side of the flange portions 21 has a larger diameter and that on the tip end side has a smaller diameter, and one inner raceway surface 18 of a double row angular contact ball bearing 41 functioning as a rolling bearing is formed on the outer peripheral surface of a large-diameter portion 11 of the shaft portion 10.

Moreover, an inner ring member 42 which has the other inner raceway surface 44 on the outer peripheral surface is fitted onto the outer peripheral surface of a small-diameter portion 12 of the shaft portion 10. Furthermore, an end shaft portion 15 having the same diameter as the small-diameter portion 12 is extended from the tip end portion of the shaft portion 10. The tip end portion of the end shaft portion 15 is caulked in a radially outward direction to form a caulking portion 17, whereby the inner ring member 42 is fixed to the outer peripheral surface of the small-diameter portion 12.

An outer ring member 45 is placed on the outer peripheral surface of the shaft portion 10 of the shaft member 1 of the wheel rolling bearing device while maintaining an annular space 49.

Outer raceway surfaces 46, 47 corresponding to the inner raceway surfaces 18, 44 of the shaft member 1 of the wheel rolling bearing device are formed on the inner peripheral surface of the outer ring member 45, spaced apart from each other at a predetermined distance in the axial direction. Between the inner raceway surfaces 18, 44 and the outer raceway surfaces 46, 47, pluralities of rolling elements (balls) 50, 51 are held by cages 52, 53, respectively, and rotatably placed.

Based on the caulking force in the case where the end shaft portion 15 of the shaft portion 10 is caulked to form the caulking portion 17, a required axial preload is applied to the pluralities of rolling elements (balls) 50, 51 which are disposed between the inner raceway surfaces 18, 44 and the outer raceway surfaces 46, 47.

In addition, a vehicle body-side flange 48 is integrally formed in the axially center portion of the outer peripheral surface of the outer ring member 45. The vehicle body-side flange 48 is fastened by bolts to a mounting surface of a vehicle body-side member supported by a suspension (not shown) of the vehicle, such as a knuckle or a carrier.

A seal member 56 is press-fitted and installed in the inner peripheral surface of one end portion of the outer ring member 45, and a tip end portion of a lip 58 of the seal member 56 is in sliding contact with a seal surface 19 which is formed in adjacent to a shoulder portion of the inner raceway surface 18 of the shaft member 1 of the wheel rolling bearing device.

Next, the shape of each of the flange portions 21 will be described in detail. The configuration of the shape of the flange portion 21 is roughly classified into "plan view as viewed from the side of the shaft portion" and "shape as viewed in the axial section" with respect to the shaft portion 10 of the shaft member 1 of the wheel rolling bearing device, and therefore they will be hereinafter respectively described.

[In a plan view as viewed from the side of the shaft portion 10 of the shaft member 1 of the wheel rolling bearing device]

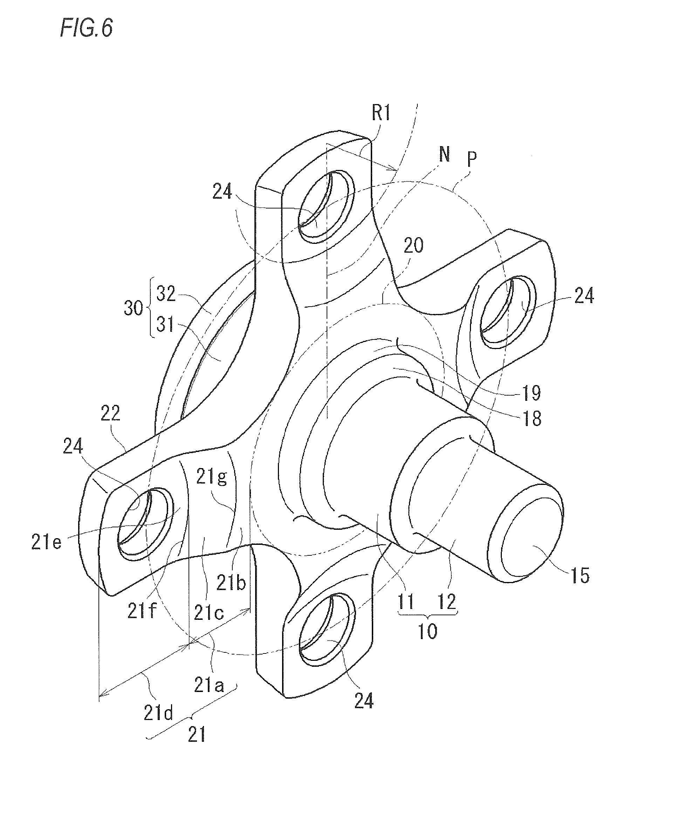

As shown in Fig. 6, the flange portion 21 is generally configured by an inner flange portion 21a and an outer flange portion 21d. The outer flange portion 21d is a portion through which the bolt hole 24 is formed, and which is placed and formed in a radially outer region.
The inner flange portion 21a is a portion which is continuously formed from the outer flange portion 21d toward the radially inner side, and which is placed and formed in a radially inner region. In the inner flange portion 21a and the outer flange portion 21d, as viewed in the axial section of the shaft portion 10, the inner flange portion 21a is formed to be thicker than the outer flange portion 21d.

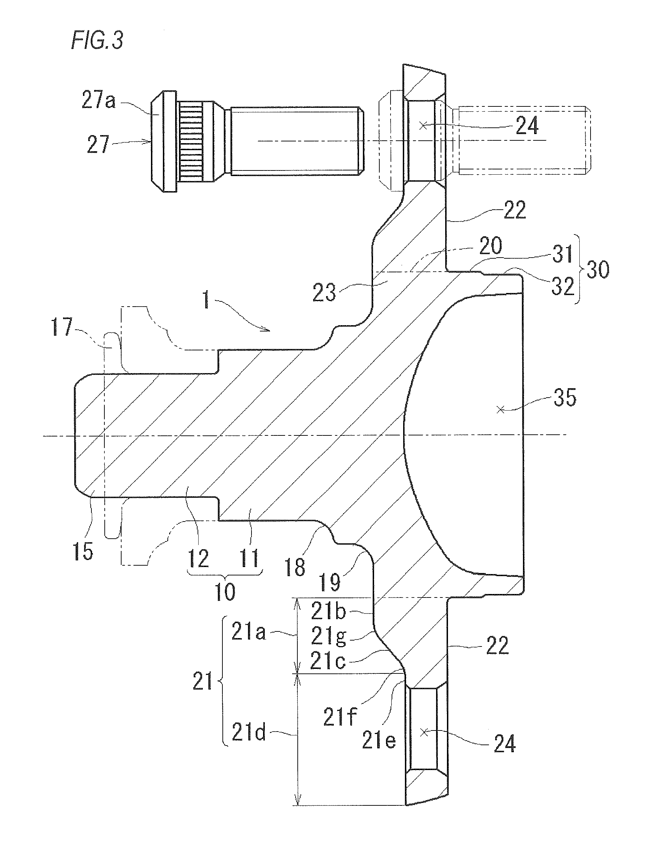

The thickness shape of the inner flange portion 21a is formed so that a radially constant length range of a position of a radially basal end portion has the thickest shape, and the thickness shape gradually becomes thinner toward the radially outer side. In more detail, the shape of the flange surface on the side of a bolt seat supporting surface 21e on which the bolt seat 27a (see Fig. 3) of the hub bolt 27 is supported is formed into the shape of a vertical surface 21b which, at the position of the radially basal end portion of the shaft portion 10, is vertical to the shaft portion 10, and which has a radially constant length. Moreover, the thickness shape is formed by forming into the shape of an inclined surface 21c which becomes gradually thinner from the position of the basal end portion of the shape of the vertical surface 21b toward the radially outer side. A rotor supporting surface 22 which is the opposite flange surface has the shape of a vertical surface which is parallel to the vertical surface 21b.

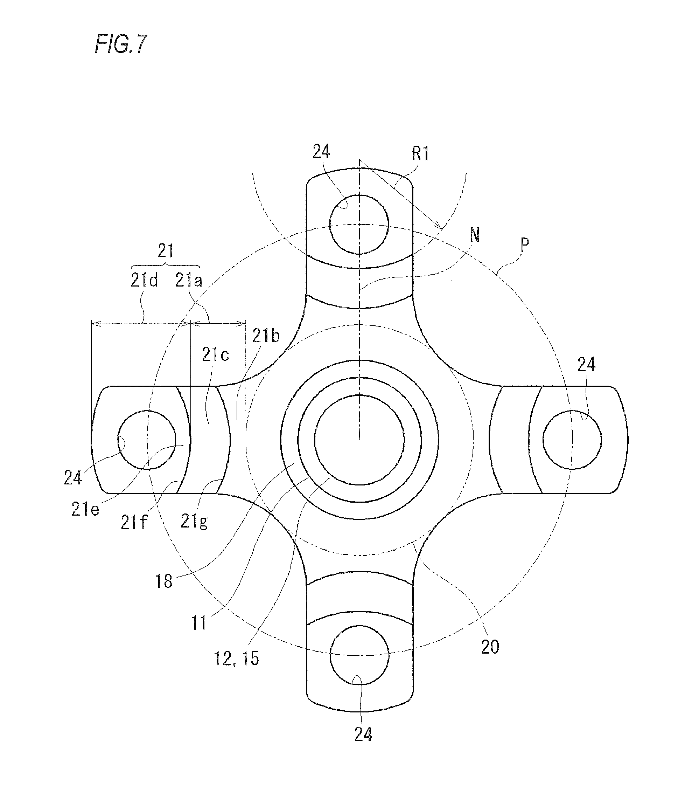

As shown in Fig. 7, a first flange surface joining portion 21f between the inclined surface 21c formed in the inner flange portion 21a, and the outer flange portion 21d is formed as a concave curved portion which surrounds the bolt hole 24 for the hub bolt 27, in a plan view as viewing the shaft member 1 of the wheel rolling bearing device from the side of the shaft portion 10. In more detail, the concave curved portion is formed by a single arcuate shape having a radius of curvature R1 which is larger than the radius of the bolt hole 24. The center of the radius of curvature R1 of the arcuate shape is located on a normal line N which passes through the center of the bolt hole 24, and which is on a pitch circle P connecting the centers of the bolt holes 24 penetrating through the plurality of flange portions 21, and on the side of the outside diameter of the pitch circle P.

Moreover, a second flange surface joining portion 21g between the inclined surface 21c formed in the inner flange portion 21a, and the vertical surface 21b is formed as a concave curved portion (in Embodiment 1, a single arcuate shape) which corresponds to the first flange surface joining portion 21f between the inclined surface 21c and the outer flange portion 21d.

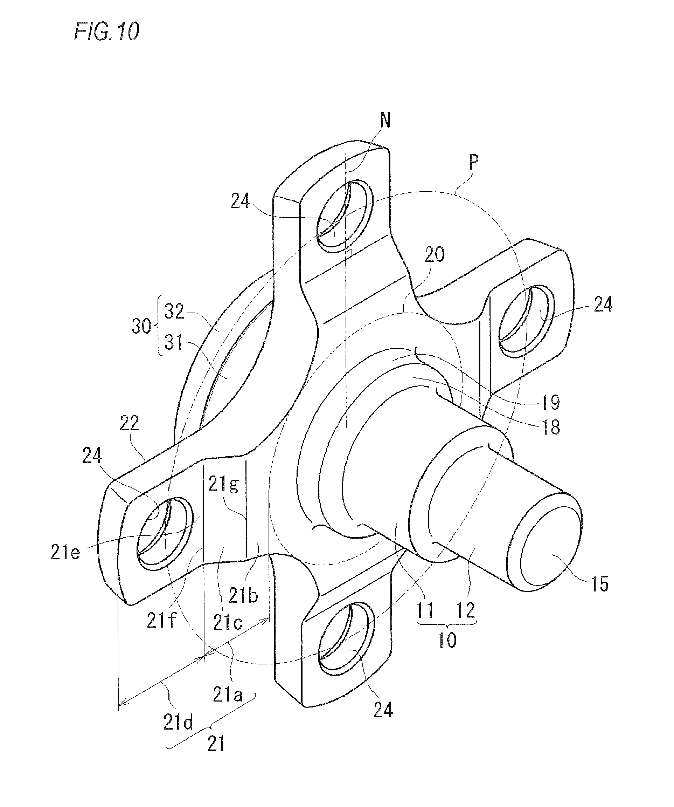

Preferably, each of the first flange surface joining portion 21f and the second flange surface joining portion 21g is configured by a single arcuate shape which has the same center as the bolt hole 24, and which is larger than the bolt hole 24. The concave curved portion is not limited to a single arcuate shape, but may be configured by a composite arc. As shown in Fig. 10, alternatively, each of the portions may be a linear portion which is perpendicular to the normal line N. A mode having such a linear portion constitutes a modification of Embodiment 1. The concave curved portion or the linear portion may be configured only in the first flange surface joining portion 21f.

### [Shape of the flange portion 21 as viewed in the axial section of the shaft portion 10]

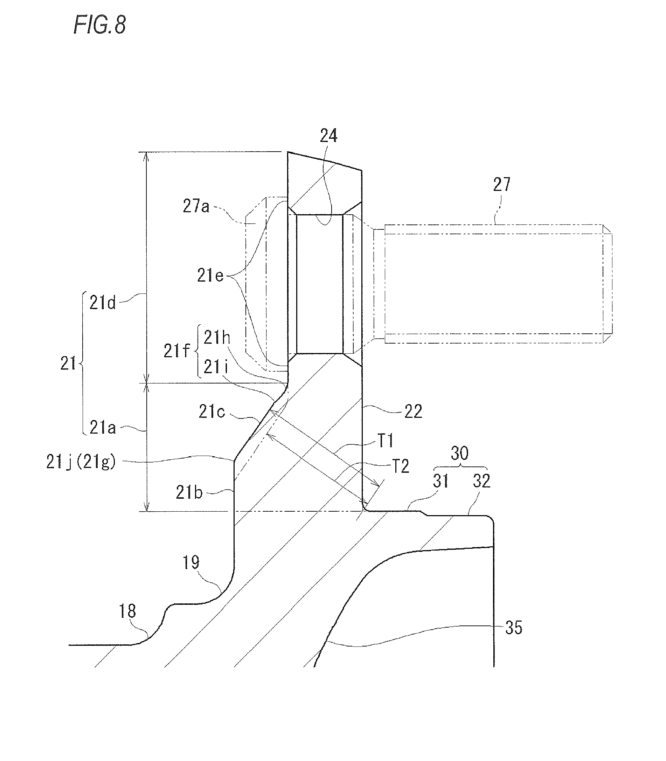

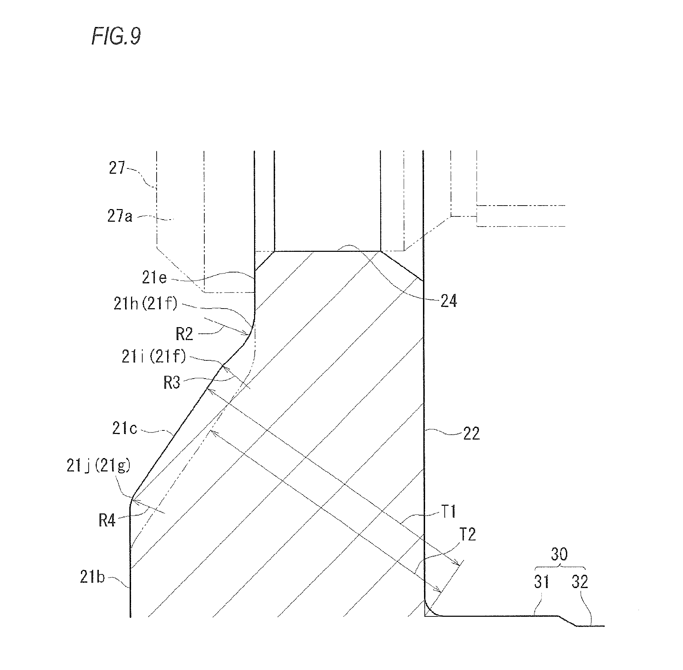

As shown in Figs. 8 and 9, as viewed in the axial section of the shaft portion 10, the shape of the flange surface extending from the vertical surface 21b which is the position of the basal end portion of the flange portion 21, to the outer flange portion 21d is configured by including the shape of a concave curved portion 21h which is connected to the outer flange portion 21d, and, on the radially inner side with respect to the concave curved portion 21h, by including a convex curved portion 21i which is continuously joined to the concave curved portion 21h. In more detail, in the joining (i.e., the first flange surface joining portion 21f) between the inclined surface 21c and the bolt seat supporting surface 21e, as viewed in the axial section of the shaft portion 10, the bolt seat supporting surface 21e and the concave curved portion 21h having a radius of curvature R2 are joined to each other, and the radially inner side of the concave curved portion 21h is joined to the inclined surface 21c through the convex curved portion 21i having a radius of curvature R3. Here, the radius of curvature R3 of the convex curved portion 21i is formed in relationship that it is smaller than the radius of curvature R2 of the concave curved portion 21h.

As viewed in the axial section of the shaft portion 10, the joining (i.e., the second flange surface joining portion 21g) between the vertical surface 21b and the inclined surface 21c is performed through a convex curved portion 21j having a radius of curvature R4. In order to prevent stress concentration from occurring, the radius of curvature R4 of the convex curved portion 21j can be set so as to form a convex curved shape, and selected to be an adequate radius of curvature. In the embodiment, the same radius of curvature as the radius of curvature R3 of the convex curved portion 21i is selected as the radius of curvature R4 of the convex curved portion 21j.

As described above, according to the shaft member 1 of the wheel rolling bearing device of Embodiment 1, in a plan view as viewed from the side of the shaft portion 10, the first flange surface joining portion 21f between the inclined surface 21c formed in the inner flange portion 21a, and the outer flange portion 21d is formed as a linear portion which is perpendicular to the normal line N passing through the center of the bolt hole 24 on the pitch circle P connecting the centers of the bolt holes 24 penetrating through the plurality of flange portions 21, or as a concave curved portion which surrounds the bolt hole 24 for the hub bolt 27.

### [Modification 2]

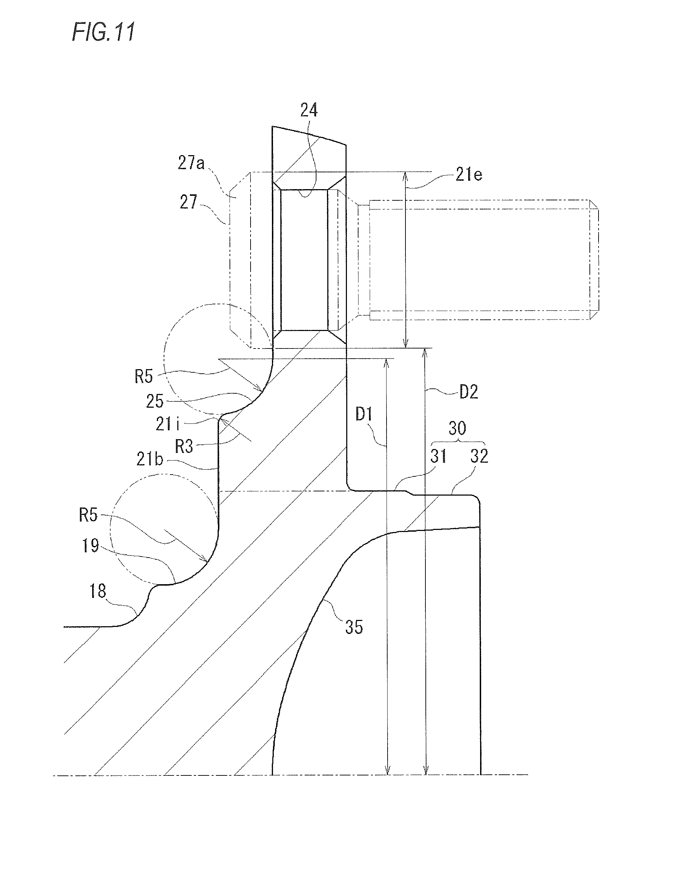

In Embodiment 1 described above, the configurations of the convex curved portion 21i and the concave curved portion 21h in the joining (i.e., the first flange surface joining portion 21f) between the inclined surface 21c and the bolt seat supporting surface 21e have been described. Fig. 11 shows Modification 2 of the embodiment. In Modification 2, the inclined surface 21c is not configured in the flange surface shape between the vertical surface 21b which is the position of the basal end portion of the flange portion 21, and the outer flange portion 21d. Moreover, a concave curved portion 25 is formed in place of the concave curved portion 21h. The concave curved portion 25 and the vertical surface 21b are joined to each other through the convex curved portion 21i having the radius of curvature R3.

The concave curved portion 25 is formed by a radius of curvature R5 which is identical with the radius of curvature R5 that, in a corner portion where the radially basal end portion of the inner flange portion 21a intersects with the inner raceway surface 18 of the shaft portion 10, is formed as the seal surface 19 (seal sliding surface) along which a tip end portion of the seal member 56 (see Fig. 1) that is disposed in the outer ring member 45 (see Fig. 1) opposed to the inner raceway surface 18 is slid. The concave curved portion 25 is formed tangentially to the bolt seat supporting surface 21e (the flange surface on which the bolt seat 27a of the hub bolt 27 is supported).

As shown in Fig. 11, the shape in which the concave curved portion 25 is tangential to the bolt seat supporting surface 21e is formed in relationship that the diameter D2 required in the bolt seat supporting surface 21e (in other words, the diameter to the end surface of the radially inner side of the bolt seat 27a in a state where the bolt seat 27a butts against the bolt seat supporting surface 21e) is larger than the diameter D1 of the end point of the concave curved portion 25 (in other words, the diameter of the tangential point between the concave curved portion 25 and the bolt seat supporting surface 21e). According to the configuration, the concave curved portion 25 is joined to the bolt seat supporting surface 21e so as to be tangential thereto, and therefore the shape is more preferable as a shape that suppresses stress concentration which is generated in accordance with a load applied from the hub bolt 27.

Next, a method of producing the shaft member of the wheel rolling bearing device of Embodiment 1 will be described with reference to Figs. 3 and 4, and Figs. 5(A) to 5(G).

The method of producing the shaft member of the wheel rolling bearing device of Embodiment 1 includes an annealing treatment step, a coating treatment step, a cold forging step, a turning step, a heat treatment step, and a polishing step.

In advance of the annealing treatment step, first, a round bar material of structural carbon steel having a carbon content of about 0.5%, such as S45C, S50C, or S55C is cut into a desired length to form a shaft-like material 60 (see Fig. 5(A)).

In the annealing treatment step, then, the shaft-like material 60 is heated at a temperature which is equal to or higher than the transformation temperature, preferably a temperature which is higher by about 20°C to 70°C than the transformation temperature.

This causes the shaft-like material 60 to undergo spheroidizing annealing in which the carbon component in the shaft-like material is spheroidized, thereby forming an annealed shaft-like material 61 (see Fig. 5(B)). In the annealed shaft-like material 61, the ductility of the material itself is improved.

In the coating treatment step, next, a coating treatment is performed to coat the surface of the annealed shaft-like material 61 with a lubricant, thereby forming a coating-treated shaft-like material 62 having a lubricant coating 36 (see Fig. 5(C)).

For example, phosphate functioning as a lubricant is applied to the surface of the annealed shaft-like material 61, thereby forming the coating-treated shaft-like material 62 having a lubricant coating (phosphate coating) 36.

In the coating-treated shaft-like material 62, a friction force generated between a molding die for cold forging and the material (substance) is reduced by the lubricant coating 36 on the surface.

Then, the coating-treated shaft-like material 62 which has undergone the annealing treatment step and the coating treatment step becomes a material exhibiting excellent cold forgeability.

The cold forging step includes a primary cold forging step and a secondary cold forging step.

In the primary cold forging step, a forward extrusion process is performed on the coating-treated shaft-like material 62 by using a forging die apparatus (not shown) for a forward extrusion process in cold forging, whereby the shaft portion (including the large-diameter portion 11, the small-diameter portion 12, and the end shaft portion 15) 10, an intermediate shaft portion (forming the flange basal portion 23 and a part of the fitting shaft portion 30) 20, and the fitting shaft portion (in this state, a forged recess 35 and the brake rotor fitting portion 31 are not formed) 30 are formed, and a primary cold forged product 63 formed by the cold forging forward extrusion process is produced (see Fig. 5(D)).

In the secondary cold forging step, next, the plurality of flange portions 21 are radially formed by using a forging die apparatus (not shown) for a lateral extrusion process in cold forging, on the outer peripheral surface of the intermediate shaft portion (the flange basal portion 23) 20 located between the shaft portion 10 and the fitting shaft portion 30, while forming the forged recess 35 in the end surface of a center portion of the fitting shaft portion 30 of the primary cold forged product 63, and a secondary cold forged product 64 is formed (see Fig. 5(E)).

In the turning step, parts of the secondary cold forged product 64, such as the rotor supporting surfaces 22 of one side surfaces of the flange portions 21, and the end surface 33 of the fitting shaft portion 30 are turned, and the bolt holes 24 are bored in the flange portions 21, thereby forming a turned forged product 65 (see Fig. 5(F)).

In the turning step, the lubricant coating 36 of the wheel fitting portion 32 of at least the fitting shaft portion 30 of the secondary cold forged product 64 remains without being turned.

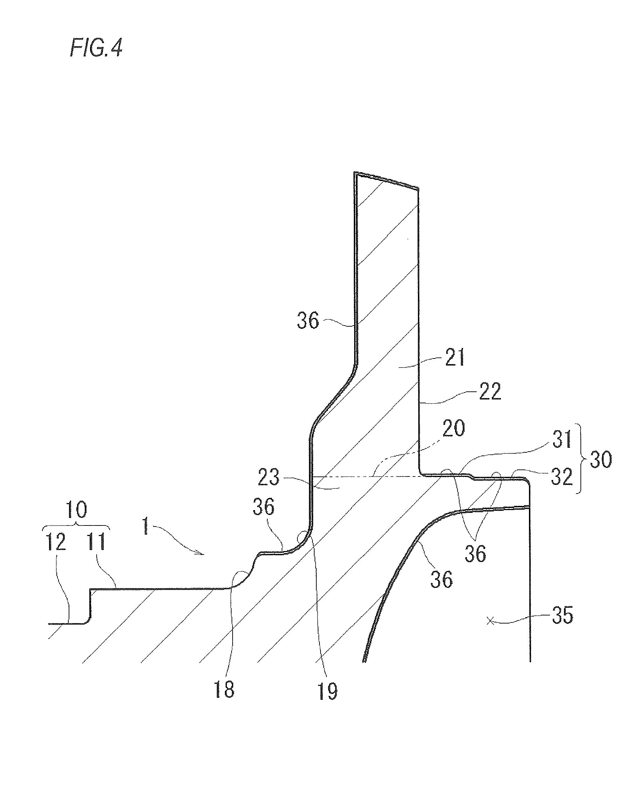

In Embodiment 1, as shown in Fig. 4, the lubricant coating 36 remains without being turned, also on the surfaces of the flange portions 21 opposite to the rotor supporting surfaces 22, the seal surface 19 which is formed in adjacent to the shoulder portion of the inner raceway surface 18, the surface of the forged recess 35, and the end surface of the end shaft portion 15 in the tip end of the shaft portion 10. Correspondingly to the area where the lubricant coating 36 remains, the turning process area is reduced, and the turning process is facilitated.

In the heat treatment (quenching and annealing steps), next, as shown in the hatched portions in Fig. 5(G), the inner raceway surface 18 of the shaft portion 10 of the turned forged product 65, a part of the large-diameter portion 11 which is adjacent to the inner raceway surface 18, the outer peripheral surface of the small-diameter portion 12, and a step difference surface between the large-diameter portion 11 and the small-diameter portion 12 are high-frequency hardened and then annealed, thereby forming a heat-treated forged product 66 which, while maintaining hardness required for the inner raceway surface, is provided also with toughness required for a shaft member of a wheel rolling bearing device (see Fig. 5(G)).

In the polishing step, finally, the surfaces (the surfaces of the hatched portions shown in Fig. 5(G)) of the heat-treated portions including the inner raceway surface 18 of the heat-treated forged product 66 are polished, and the shaft member 1 of the wheel rolling bearing device is formed.

In the shaft member 1 of the wheel rolling bearing device of Embodiment 1, as described above, the first flange surface joining portion 21f between the inclined surface 21c formed in the inner flange portion 21a, and the outer flange portion 21d is formed as a linear portion which is perpendicular to the normal line N passing through the center of the bolt hole 24 on the pitch circle P connecting the centers of the bolt holes 24 penetrating through the plurality of flange portions 21, or as a concave curved portion which surrounds the bolt hole 24 for the hub bolt 27, in a plan view as viewed from the side of the shaft portion.

In a usual lateral extrusion process in cold forging, in the case where the extrusion process is laterally performed without being restricted by a molding die, the shape of the laterally extruded portion is extruded in a shape (in Embodiment 1, the outside diameter of the intermediate shaft portion 20 of the primary cold forged product 63 shown in Figs. 5(A) to 5(G)) which is approximately identical with the outside diameter of the material before the extrusion process, to be formed in a shape which is convex toward the radial outside. In the case where a shape which is concave toward the radial outside, or a complex shape is to be formed, therefore, the shape must be formed while the shape is restricted by a molding die, but the friction force between the laterally extruded portion and the molding die is increased. Therefore, a molding failure such as a crack of a molded surface must be considered, and such a process has difficulty in molding.

By contrast, in the coating-treated shaft-like material 62 that is used as a material to which extrusion of cold forging is to be applied in Embodiment 1, the material ductility is improved by performing spheroidizing annealing in which the carbon component is spheroidized, and the friction force with respect to the molding die of cold forging is reduced by forming the phosphate coating. Therefore, the first flange surface joining portions 21f can have the above-described shape.

Consequently, the difference of the distances from the positions of the first flange surface joining portions 21f between the inclined surfaces 21c formed in the inner flange portions 21a, and the outer flange portions 21d, to the centers of the hub bolts 27 can be shortened as compared to the case where molding is performed by a usual lateral extrusion process in cold forging. Therefore, local concentration of stress (stress concentration) which is generated by a load applied to the flange portions 21 can be suppressed.

Furthermore, the second flange surface joining portions 21g between the inclined surfaces 21c of the inner flange portions 21a and the vertical surface 21b have a shape corresponding to the first flange surface joining portions 21f between the inclined surfaces 21c and the outer flange portions 21d. Therefore, the two-point distances between the vertical surface 21b and the outer flange portions 21d become uniform, and hence the forging fluidity in the case where the flange portions 21 are formed to radially extend in an outward radial direction by the lateral extrusion process can be improved.

Preferably, the concave curved portion is formed by a single arcuate shape having a radius of curvature R1 which is larger than the radius of the bolt hole 24, and the center of the radius of curvature R1 of the arcuate shape is located on the normal line N, and in the center of the bolt hole 24 or on the side of the outside diameter of the pitch circle P. According to the configuration, local concentration of stress (stress concentration) which is generated by a load applied to the flange portions 21 can be suppressed without complicating the shape.

As illustrated in Fig. 9, the convex curved portion 21i and the concave curved portion 21h are continuously disposed, thereby enabling that, without causing the inclined surface 21c to interfere with the bolt seat supporting surface 21e, the disposed position of the inclined surface 21c can be changed, and the thickness of the portion of the inclined surface 21c of the inner flange portion 21a can be increased. In usual formation by cold forging, namely, the shape where the inclined surface of the inner flange and the bolt seat supporting surface 21e are joined to each other is at the position indicated by the phantom line in the figure of Fig. 9, and the distance between the inclined surface of the phantom line and the basal end portion of the fitting shaft portion is indicated by T2. In the embodiment, by contrast, the convex curved portion 21i and the concave curved portion 21h are continuously disposed, and therefore the distance T1 between the inclined surface 21c and the basal end portion of the fitting shaft portion 30 can be made thicker than T2. The radius of curvature R2 of the concave curved portion 21h is larger than the radius of curvature R3 of the convex curved portion 21i, and therefore stress concentration which is generated in accordance with the load applied from the hub bolt 27 can be suppressed.

According to the method of producing the shaft member of the wheel rolling bearing device of Embodiment 1, in the annealing treatment step previous to the coating treatment step which is the previous step of the cold forging step (primary and secondary cold forging steps), the shaft-like material 60 made of a round bar material of structural carbon steel such as S45C, S50C, or S55C is heated and annealed at a temperature which is equal to or higher than the transformation temperature, thereby forming the annealed shaft-like material 61 in which the ductility of the material is improved.

In the coating treatment step, thereafter, the lubricant coating 36 which reduces a friction force generated between the surface of the annealed shaft-like material 61 and the molding die for cold forging is applied to the surface to form the coating-treated shaft-like material 62.

Therefore, the coating-treated shaft-like material 62 becomes a material exhibiting excellent forgeability.

In the subsequent cold forging step, therefore, the number of forging operations can be reduced as compared with the production method which is disclosed in Patent Document 1, and in which primary, secondary, and tertiary cold forgings are necessary.

In Embodiment 1, the cold forged product (secondary cold forged product 64) integrally having the shaft portion 10, the fitting shaft portion 30, and the plurality of flange portions 21 can be easily formed by the two cold forging steps or the primary cold forging step and the secondary cold forging step.

As a result, the number of cold forgings, and forging die apparatuses which are necessary for cold forging can be reduced, and the cost can be lowered.

In the turning step, the lubricant coating 36 of the wheel fitting portion 32 of at least the fitting shaft portion 30 of the cold forged product (secondary cold forged product 64) remains without being turned. Then, galvanic corrosion or seizing which may occur in a contact portion between the wheel fitting portion 32 and the wheel (for example, an aluminum-alloy-made wheel) that is fitted to the wheel fitting portion 32 can be prevented from occurring by the lubricant coating 36 remaining on the outer peripheral surface of the wheel fitting portion 32.

As a result, paint or wax application for preventing galvanic corrosion is not required to be performed on the outer peripheral surface of the wheel fitting portion 32.

In the shaft member 1 of the wheel rolling bearing device which is produced by the method of producing the shaft member of the wheel rolling bearing device of Embodiment 1, the lubricant coating 36 is disposed on the outer peripheral surface of the wheel fitting portion 32 of the fitting shaft portion 30, and therefore galvanic corrosion or seizing which may occur in the contact portion with respect to the wheel (for example, an aluminum-alloy-made wheel) can be prevented from occurring.

Although the embodiment of the invention has been described with reference to Embodiment 1, the shaft member of the wheel rolling bearing device of the invention is not limited to the embodiment, and may be implemented in various other modes.

In the shaft member of the wheel rolling bearing device, preferably, the shape of the concave curved portion is formed by a concave curved portion which is identical with a concave curved portion that, in the corner portion where the radially basal end portion of the inner flange portion intersects with the inner raceway surface of the shaft portion, is formed as the seal sliding surface along which the tip end portion of the seal member that is disposed in the outer ring member opposed to the inner raceway surface is slid, and the concave curved portion is formed tangentially to the flange surface on which the bolt seat of the hub bolt is supported.

According to the configuration, preferably, the shape of the concave curved portion is formed by a concave curved portion which is identical with the concave curved portion that, in the corner portion where the radially basal end portion of the inner flange portion intersects with the inner raceway surface of the shaft portion, is formed as the seal sliding surface along which the tip end portion of the seal member that is disposed in the outer ring member opposed to the inner raceway surface, and the concave curved portion is formed tangentially to the flange surface on which the bolt seat of the hub bolt is supported. According to this, it is more preferable that the concave curved portion is joined so as to be tangential to the flange surface on which the bolt seat of the hub bolt is supported, and therefore more preferable as a shape which suppresses stress concentration which is generated in accordance with a load applied from the hub bolt.

### Industrial Applicability

According to the invention, in a shaft member of a wheel rolling bearing device, local concentration of stress (stress concentration) which is generated by a load applied to flange portions that are formed by cold forging can be suppressed.

The application is based on Japanese Patent Application No. 2011-048896 filed March 7, 2011, and its disclosure is incorporated herein by reference. Description of Reference Numerals and Signs
- 1: shaft member for wheel rolling bearing device
- 10: shaft portion
- 11: large-diameter portion of shaft portion
- 12: small-diameter portion of shaft portion
- 15: end shaft portion of shaft portion
- 17: caulking portion
- 18: inner raceway surface
- 19: seal surface
- 20: intermediate shaft portion
- 21: flange portion
- 21a: inner flange portion
- 21b: vertical surface
- 21c: inclined surface
- 21d: outer flange portion
- 21e: bolt seat supporting surface
- 21f: first flange surface joining portion
- 21g: second flange surface joining portion
- 21h: concave curved portion
- 21i: convex curved portion
- 21j: convex curved portion
- 22: rotor supporting surface
- 23: flange basal portion
- 24: bolt hole
- 25: concave curved portion
- 27: hub bolt
- 27a: bolt seat
- 30: fitting shaft portion
- 31: brake rotor fitting portion
- 32: wheel fitting portion
- 33: end surface of fitting shaft portion
- 35: forged recess
- 36: lubricant coating
- 41: angular contact ball bearing
- 42: inner ring member
- 44: inner raceway surface
- 45: outer ring member
- 46: outer raceway surface
- 47: outer raceway surface
- 48: vehicle body-side flange
- 49: annular space
- 52: cage
- 53: cage
- 55: brake rotor
- 56: seal member
- 58: lip
- 60: shaft-like material
- 61: annealed shaft-like material
- 62: coating-treated shaft-like material
- 63: primary cold forged product
- 64: secondary cold forged product
- 65: turned forged product
- 66: heat-treated forged product
- D1: diameter of end point of concave curved portion
- D2: diameter required in bolt seat supporting surface
- T1: distance between inclined surface and basal end portion of fitting shaft portion
- T2: distance between inclined surface which is usually formed, and basal end portion of fitting shaft portion
- R1: radius of curvature of arcuate shape
- R2: radius of curvature of concave curved portion
- R3: radius of curvature of convex curved portion
- R4: radius of curvature of convex curved portion
- R5: radius of curvature of concave curved portion

## Claims

1. A shaft member of a wheel rolling bearing device, comprising: a shaft portion in which an inner-ring raceway surface is formed on an outer peripheral surface; a fitting shaft portion which is formed on a side of one end of the shaft portion; and a plurality of flange portions which radially extend in an outward radial direction, and through each of which a bolt hole where a hub bolt is to be placed is formed, **characterized in that**
the flange portions are formed by cold forging,
each of the flange portions includes: an outer flange portion through which the bolt hole is disposed, and which is in a radially outward region; and
an inner flange portion which is radially inwardly formed continuously from the outer flange portion, and which is in a radially inward region,
the inner flange portion is formed to be thicker than the outer flange portion as viewed in an axial section,
in order to cause a thickness shape of the inner flange portion to be thickest in a radially constant length range of a position of a radially basal end portion, and gradually become thinner toward a radially outer side, a shape of a flange surface which is on a side where a bolt seat of the hub bolt is disposed is formed as a shape of a vertical surface which has a constant length in a radial direction, in the position of the radially basal end portion, and, as a shape of the flange surface between a basal end portion of the shape of the vertical surface and the outer flange portion, includes: a shape of a concave curved surface which is connected to the outer flange portion; and a convex curved portion which is continuously joined to the concave curved portion in a radially inner side with respect to the concave curved portion, and a radius of curvature of the convex curved portion is smaller than a radius of curvature of the concave curved portion.

2. The shaft member of the wheel rolling bearing device according to claim 1, **characterized in that**
the shape of the concave curved portion is formed by a concave curved portion which is identical with a concave curved portion that, in a corner portion where the radially basal end portion of the inner flange portion intersects with an inner raceway surface of the shaft portion, is formed as a seal sliding surface along which a tip end portion of a seal member that is disposed in an outer ring member opposed to the inner raceway surface is slid, and the concave curved portion is formed tangentially to the flange surface on which the bolt seat of the hub bolt is supported.
